# EUROPÄISCHE PATENTSCHRIFT

(11) **EP 0 906 741 B1**
(45) Veröffentlichungstag und Bekanntmachung des Hinweises auf die Patenterteilung: **15.01.2003**
(21) Anmeldenummer: 98118275.1
(22) Anmeldetag: 26.09.1998
(51) Int. Cl.: A47J 43/07, B02C 18/12, B02C 18/16

(54) **Zerkleinerungsvorrichtung mit einem voreinstellbaren Behältervolumen**
Crushing device with a preadjustable container volume
Dispositif de concassage avec un volume de récipient préajustable

(30) Priorität: 16.04.1998 DE 19816786; 04.10.1997 DE 19743848
(43) Veröffentlichungstag der Anmeldung: 07.04.1999
(73) Patentinhaber: Retsch GmbH & Co. KG, 42781 Haan (DE)
(72) Erfinder: Anghel, Radu, 40223 Düsseldorf (DE); Meyer, Hans-Jürgen, 40883 Ratingen (DE); Fischer, Harald, 40822 Mettmann (DE)
(74) Vertreter: Müller, Karl-Ernst, Dr., Dipl.-Ing.

(56) Entgegenhaltungen:
- EP-A- 0 628 350
- DE-A- 3 535 939
- US-A- 4 456 450

## Beschreibung

Die Erfindung betrifft eine Zerkleinerungsvorrichtung mit einem Behälter zur Aufnahme des zu zerkleinernden Gutes und einem darin umlaufend angeordneten Messer sowie mit einem den Arbeitsraum des Behälters verschließenden, als Deckel ausgebildeten Kolben, wobei der Arbeitsraum über den zum Boden des Behälters hin bewegbaren Kolben verkleinerbar ist.

Eine Zerkleinerungsvorrichtung mit den vorgenannten Merkmalen ist in der EP 0 628 350 A1 beschrieben. Wie dazu in der Beschreibungseinleitung der gattungsbildenden Druckschrift ausgeführt ist, werden derartige Zerkleinerungsvorrichtungen vor allem im Laborbereich für die verschiedensten Anwendungen benötigt. Bei verschiedenen Materialien treten dabei Schwierigkeiten auf, weil das Gut z.B. vom Messer weggeschleudert statt zerschnitten wird, weil das Gut vom Messer mitgenommen statt geschnitten wird, oder weil aus irgend einem anderen Grunde die Konsistenz des Gutes ein einwandfreies Zerkleinern und Mischen nicht zuläßt. Dies trifft vor allem bei faserigen, flockigen oder bandförmigen Materialien mit niedrigem spezifischen Gewicht und in trockenem Zustand zu. Hierzu sieht die bekannte Zerkleinerungsvorrichtung vor, daß das Messer an einem von der Oberseite des Behälters her in den Behälter einschiebbaren Antrieb gehaltert ist, so daß das Messer mit der Absenkung seines Antriebes in den Behälter das zu zerkleinernde Gut durchfährt, wobei ein den Behälter verschließender Kolben als Deckel der Eindringbewegung des Messers in den Behälter federunterstützt nachfolgt.

Mit. dieser Lösung ist der Nachteil verbunden, daß der apparative Aufwand für eine derartige Zerkleinerungsvorrichtung sehr hoch ist, weil der Antrieb für das Messer beweglich ist; weiterhin ist in nachteiliger Weise die Handhabung dieser Zerkleinerungsvorrichtung aufwendig, weil nach dem Wechsel des Behälters oder einer erneuten Befüllung mit zu zerkleinerndem Material zunächst der Messerantrieb wieder eingerichtet werden muß.

Der Erfindung liegt daher die Aufgabe zugrunde, eine Zerkleinerungsvorrichtung der eingangs genannten Art zur Verfügung zu stellen, die in ihrer konstruktiven Ausbildung und in ihrer Handhabung einfacher ist.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, daß der Kolben ein sein kontinuierliches Einsinken in den Arbeitsraum des Behälters in Richtung auf das an dessen Boden angeordnete Messer bewirkendes Eigengewicht aufweist, und daß der eine der Höhe des Behälters zwischen der Messerebene und dem oberen Rand des Behälters entsprechende axiale Erstreckung aufweisende Kolben mittels an seiner äußeren Mantelfläche angeordneter Arretierungsgestaltungen in einer vorbestimmten Endposition festlegbar ist. Mit der Erfindung ist der Vorteil verbunden, daß die Zerkleinerungsvorrichtung einfach aufgebaut ist, weil das Messer stationär am Boden des Behälters angeordnet und die Verkleinerung des Arbeitsraumes und damit die Verbesserung der Schneidwirkung des Messers allein durch den aufgrund seines Eigengewichtes in den Behälter einsinkenden, als Deckel wirkenden Kolben erreicht ist. Aufgrund der auf der äußeren Mantelfläche des Kolbens vorgesehenen Arretierungsgestaltungen kann die Endlage des Kolbens in dem Behälter fixiert und voreingestellt werden. Damit ist es nicht nur möglich, in Abhängigkeit von dem zu zerkleinernden Gut das bestmögliche Behältervolumen festzulegen, es ist auch in einfacher Weise möglich, bei der Zerkleinerung unterschiedlicher Proben desselben Gutes ein reproduzierbares Verhältnis von Gutvolumen zu Totvolumen einzustellen. Aufgrund seines Eigengewichtes ermöglicht der Deckel zudem ein Vorkomprimieren des zu zerkleinernden Gutes.

Aus der DE-PS 164 471 ist eine selbsttätige Sicherheitsfüllvorrichtung für Fleischschneidemaschinen bekannt, die einen auf die Schneidemaschine aufgesetzten Zylinder mit einem darin angeordneten zweiteiligen Kolben aufweist, der aufgrund seines Gewichts für ein Nachführen der Fleischmasse in die nachgeordnete Schneidemaschine sorgt.

Bei einer in der DE 82 00 710 U1 beschriebenen Vorrichtung zum Zerkleinern von Abfallstücken aus Styropor ist es bekannt geworden, dem händisch druckbetätigten und als Kolben wirkenden Behälterdeckel im Inneren der Vorrichtung Anschläge zuzuordnen, um beim Nachdrücken des Deckels dessen Berührung mit dem umlaufenden Messer zu verhindern.

Nach einem ersten Ausführungsbeispiel der Erfindung weist der Kolben als Arretierungsgestaltung mehrere mit axialem Abstand zueinander angeordnete umlaufende Rastnuten zur Aufnahme eines über den oberen Rand des Behälters überstehenden O-Ringes auf. Damit ist in sehr einfacher Weise möglich, durch die Positionierung des O-Ringes in einer der Rastnuten die gewünschte Eindringtiefe des Kolbens in den Behälter festzulegen, so daß sich ein Arbeitsraum vorbestimmter Größe von selbst ergibt.

Alternativ kann zur Erreichung des gleichen Zweckes vorgesehen sein, daß der Kolben auf seiner äußeren Mantelfläche einen Stahlring aufweist und an der Außenseite des Behälters ein beliebig positionierbarer Einstellring mit an seiner dem Behälter umschließenden Innenseite angeordneten Permanentmagneten angesetzt ist.

Über die in den Ausführungsbeispielen beschriebenen Arretierungsgestaltungen hinaus eignen sich als Arretierungsgestaltungen im Sinne der Erfindung alle Gestaltungen, die die Voreinstellung einer Endposition für den einsinkbaren Kolben erlauben.
Als Sicherheit gegen eine Berührung des Messers durch den absinkenden Kolben ist nach einem Ausführungsbeispiel der Erfindung vorgesehen, daß der Kolben an seinem oberen Rand einen den Innendurchmesser des Behälters überragenden Wulst aufweist; damit ist eine maximale Eindringtiefe und Endlage des Kolbens in den Behälter sichergestellt.

Für die Zerkleinerung von insbesondere staubigem Material kann vorgesehen sein, daß zwischen der äußeren Mantelfläche des Kolbens und der Innenwandung des Behälters eine Gleitdichtung angeordnet ist; vorzugsweise ist die Gleitdichtung aus dem gleichen Material wie der Kolben selbst ausgebildet.

Hinsichtlich der Ausbildung des Behälters bzw. der Messeranordnung kann zunächst vorgesehen sein, daß der Behälter auf ein den Messerantrieb enthaltendes Gehäuse aufsetzbar und mittels einer Nut/Feder-Anordnung an dem Gehäuse verdrehgesichert festlegbar ist; hierzu kann der Behälter eine Nase und das Gehäuse eine entsprechende Nut aufweisen, so daß der Behälter immer in der gleichen Positionierung in das Gehäuse einsetzbar ist.

Es kann weiterhin vorgesehen sein, daß der Behälter an seinem Boden eine zentrisch angeordnete, in den Arbeitsraum des Behälters hineinragende Hülse zur umschließenden Aufnahme der Antriebswelle des Messerantriebes aufweist und ein auf seiner Außenseite das Messer tragender Messerzylinder die Hülse übergreifend auf die Hülse aufsetzbar und innenseitig mit. der durch die Hülse ragenden Antriebswelle verriegelbar ist.

Hinsichtlich der Ausbildung des Messers kann vorgesehen sein, daß das Messer als ein den Messerzylinder spiralförmig mit axialem Versatz umschließendes Spiralmesser ausgebildet ist.

Gemäß einer bevorzugten Ausführungsform können an dem Kolben radial von seiner äußeren Mantelfläche nach innen bis in den Arbeitsraum des Behälters führende Überströmkanäle ausgebildet sein. Soweit mit der Zerkleinerungsvorrichtung nämlich Material mit einem hohen Flüssigkeitsanteil zerkleinert werden soll, erfolgt insbesondere zu Beginn des Zerkleinerungsvorganges ein Freisetzen des Flüssigkeitsanteils, so daß die Gefahr besteht, daß bei einem hohen Füllungsgrad des Behälters aufgrund der durch das Einsinken des Kolbens aufgebrachten Druckkraft die Flüssigkeit in dem Spalt zwischen der äußeren Mantelfläche des Kolbens und der Innenwandung des Behälters nach oben steigt und über den oberen Rand des Behälters nach außen austritt. Mit der erfindungsgemäßen Ausgestaltung ist dieser nachteilige Effekt vermieden, da die aufsteigenden Flüssigkeitsanteile über die Überströmkanäle im Kolben wieder in den Arbeitsraum des Behälters zurückgeleitet werden. Um dieses selbsttätige Zurückfließen der Flüssigkeitsanteile zu verbessern, können die Überströmkanäle eine nach innen geneigte Bodenfläche aufweisen.

Es kann vorgesehen sein, daß der Kolben aus einem Kolbenunterteil und einem darauf mittels Stegen abgestützten Kolbenoberteil besteht, wobei der zwischen Kolbenunterteil und Kolbenoberteil bestehende Zwischenraum die Überströmkanäle ausbildet, wobei in einer Weiterbildung die Stege als radial verlaufende Trennwände zwischen durch sie in dem Kolben gebildeten Überströmkammern ausgebildet sein können.

Um auch im Bereich der Stege jegliche eventuelle Kapillarwirkung zu vermeiden, kann vorgesehen sein, daß die Stege gegenüber der äußeren Mantelfläche des Kolbens unter Ausbildung eines Abstandes zur Innenwandung des Behälters radial nach innen versetzt sind.

In der Zeichnung sind Ausführungsbeispiele der Erfindung wiedergegeben, welche nachstehend beschrieben sind; es zeigen
- Fig. 1: einen Behälter einer Zerkleinerungsvorrichtung im Schnitt in einer ersten Ausführungsform;
- Fig. 2: eine andere Ausführungsform des Behälters in einer schaubildlichen Ansicht;
- Fig. 3: den Gegenstand der Fig. 2 im Schnitt;
- Fig. 4: eine weitere Ausführungsform des Behälters im Schnitt entsprechend der Darstellung in Figuren 1 und 3;
- Fig. 5: den Kolben entsprechend Figur 4 in Seitenansicht,
- Fig. 6: den Kolben gemäß Figur 5 in einer schaubildlichen Ansicht.

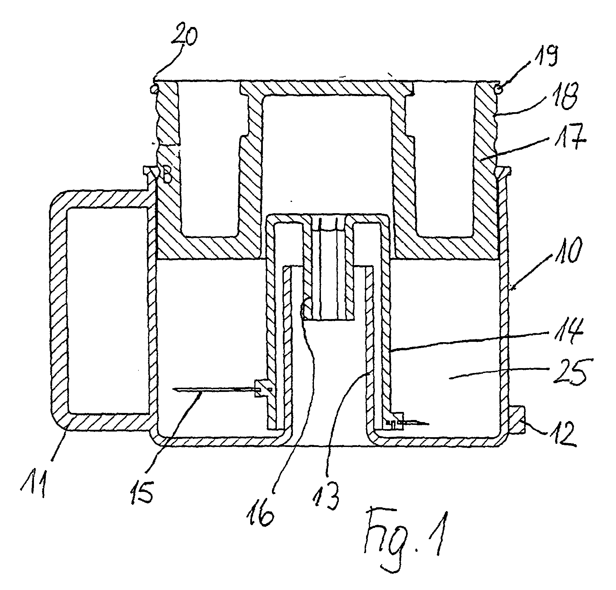

Der aus Fig. 1 ersichtliche Behälter 10 für eine Zerkleinerungsvorrichtung besteht beispielsweise aus Borosilicatglas und hat auf seiner Außenseite einen Handgriff 11 sowie einen Zentriervorsprung 12, dem in dem nicht dargestellten Gehäuse der Zerkleinerungsvorrichtung eine Nut zur zentrierenden Aufnahme des Zentriervorsprungs 12 und damit zur Orientierung des Behälters 10 gegenüber dem Gehäuse zugeordnet ist. Der Behälter 10 hat an seinem Boden eine in den Arbeitsraum 25 des Behälters 10 hineinragende zentrische Hülse 13, die zur umschließenden Aufnahme einer von dem Gehäuse der Zerkleinerungsvorrichtung ausgehenden und ebenfalls nicht dargestellten Antriebswelle für das Messer eingerichtet ist. Auf die Hülse 13 des Behälters 10 ist ein Messerzylinder 14 aufgestülpt, auf dessen Außenseite ein als Spiralmesser mit axialem Versatz ausgebildetes Messer 15 befestigt ist, wobei der Messerzylinder 14 mit einem Verriegelungsabsatz 16 in das Innere der Hülse 13 hineinreicht, so daß in einer nicht dargestellten Weise die Verriegelung des Messerzylinders 14 mit der Antriebswelle herstellbar ist. Der Arbeitsraum 25 des Behälters ist demzufolge durch den Ringraum zwischen der Hülse 13 und der Außenwandung des Behälters 10 in seiner diametralen Erstreckung definiert.

Auf seiner Oberseite ist auf den Behälter ein Kolben 17 aufgesetzt, der dem ringraumartigen Arbeitsraum 25 angepaßt und in das Innere des Behälters 10 einsinkbar ist, wobei der Kolben 17 die Hülse 13 übergreift.

Auf seiner äußeren Mantelfläche ist der Kolben 17 mit axial voneinander beabstandeten Rastnuten 18 versehen, in denen jeweils ein O-Ring 19 einlegbar ist, der über den oberen Rand des Behälters 10 übersteht. In der in Fig. 1 dargestellten Position ist der O-Ring 19 in die oberste Rastnut 18 eingelegt. Zusätzlich hierzu ist der Kolben 17 an seinem oberen Rand mit einem Wulst 20 versehen, der den oberen Rand des Behälters 10 überragt, so daß damit eine Endlagensicherung für das Einsinken des Kolbens 17 in den Behälter 10 gegeben ist, beispielsweise wenn der O-Ring 19 versehentlich nicht aufgesetzt worden ist oder aber sich mit in den Behälter 10 eingeschoben haben sollte. Diese Endlage ist. so bemessen, daß der Fuß des Kolbens 17 das umlaufende Messer nicht berührt.

Der Kolben, der vorzugsweise aus einem sterilisierbaren Kunststoff, wie beispielsweise PVDF, PEEK, PSU besteht, weist ein solches Eigengewicht auf, daß der Kolben nach dem Einsetzen in den Behälter 10 je nach Beschaffenheit des zu zerkleinernden Gutes dieses vorkomprimiert oder aber während des Zerkleinerungsvorganges dem umlaufenden Messer 15 zuführt, bis seine durch die Höhenlage des O-Ringes 19 in einer zugeordneten Rastnut 18 an der äußeren Mantelfläche des Kolbens 17 vorgegebene Endlage erreicht ist.

Wie nicht weiter dargestellt, kann zwischen der äußeren Mantelfläche des Kolbens und der Innenwandung des Gehäuses 10 für die Zerkleinerung von schwierigen, insbesondere staubigen Materialen eine Gleitdichtung vorgesehen sein, die vorzugsweise aus dem gleichen Material wie der Kolben selbst besteht.

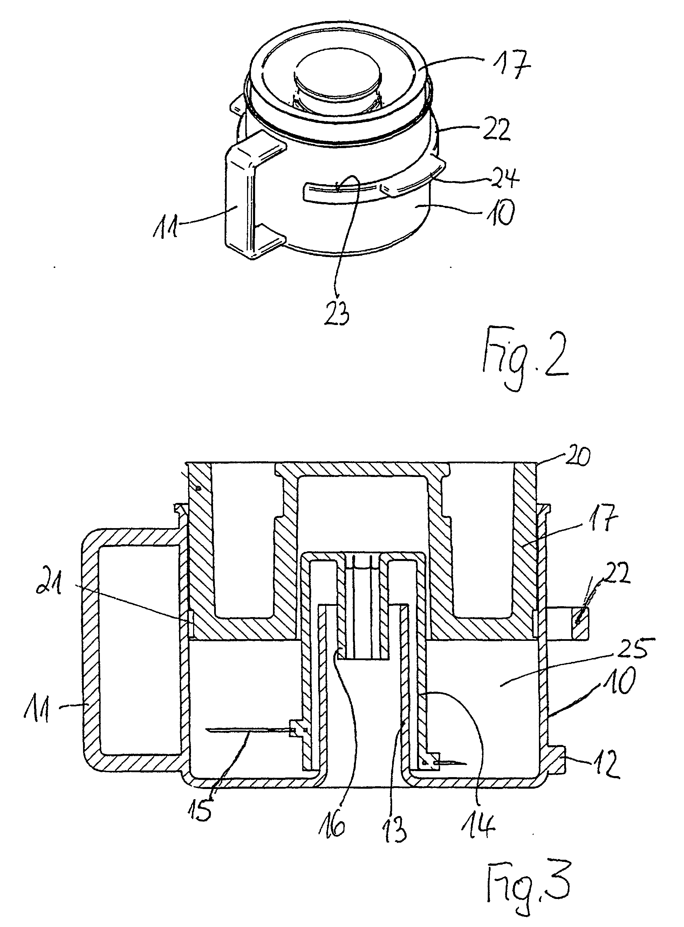

Als Alternative zu der in Fig. 1 dargestellten Arretierungsgestaltung kann gemäß dem in den Fig.2 und 3 dargestellten Ausführungsbeispielen der Kolben auf seiner äußeren Mantelfläche einen eingezogenen Stahlring 21 aufweisen, wobei auf der Außenseite des Behälters 10 ein Einstellring 22 ansetzbar ist und in seiner Höhenlage verschiebbar ist, welcher an seiner den Behälter 10 umschließenden Innenfläche mehrere Permanentmagneten 23 aufweist, so daß je nach der vorbestimmten Höhenlage des Einstellringes 22 an dem Behälter 10 der Kolben 17 in seiner Einsinkbewegung in den Behälter 10 bei Erreichen der durch den Einstellring 22 vorbestimmten Lage durch das Zusammenwirken der Permanentmagneten 23 mit dem Stahlring 21 des Kolbens 17 festgelegt wird.

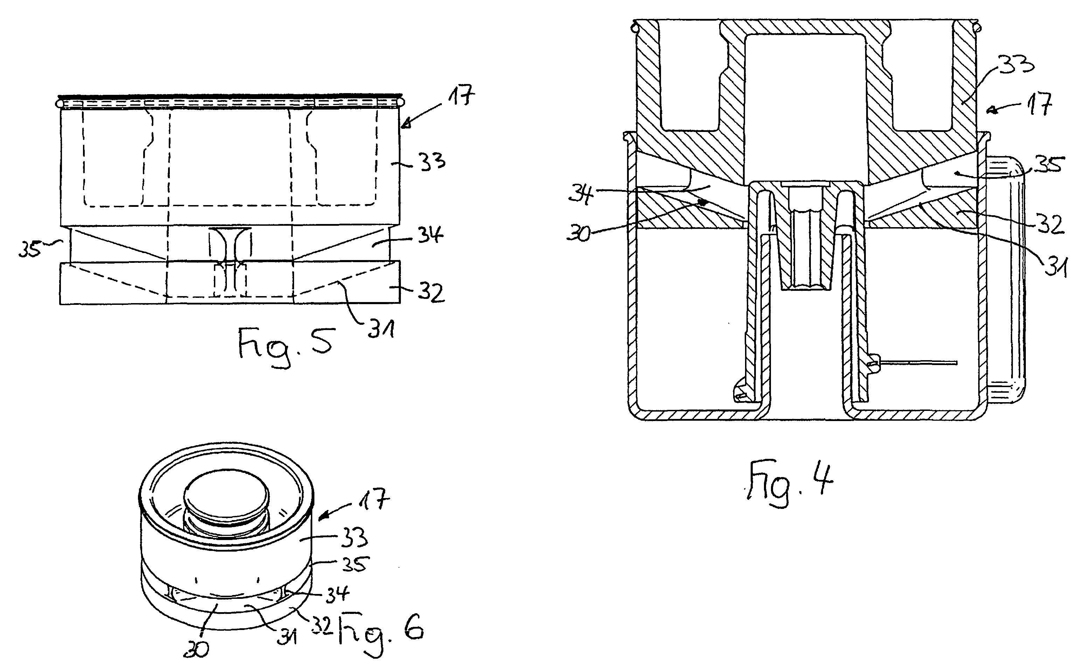

Bei dem in den Figuren 4 bis 6 dargestellten Ausführungsbeispiel ist der Kolben 17 dadurch modifiziert, daß in dem Kolben radial von seiner äußeren Mantelfläche nach innen bis in den Arbeitsraum 25 des Behälters 10 führende Überströmkanäle 30 ausgebildet sind. Bei der Zerkleinerung von insbesondere biologischen Materialien mit hohem Wasseranteil wie beispielsweise Früchte, Kartoffeln oder dergleichen mit entsprechend hohen Drehzahlen, kommt es bei Zerkleinerungsbeginn zu einer Freisetzung des hohen Flüssigkeitsanteils der zu zerkleinernden Materialien, bevor sich eine Maische aus den Flüssigkeitsanteilen und den Festbestandteilen bilden kann. Der Flüssigkeitsanteil rotiert durch die bei hohen Drehzahlen wirksamen Fliehkräfte hohlzylinderförmig an der Behälterwand, und insbesondere bei einem höheren Füllungsgrad des Behälters können die nach oben gerichteten Druckkräfte des rotierenden Flüssigkeits-Hohlzylinders so groß werden, daß in Verbindung mit der Kapillarität des Dichtspaltes zwischen der äußeren Mantelfläche des Kolbens 17 und der Innenwandung des Behälters 10 die Flüssigkeitsanteile nach oben steigen und am oberen Behälterrand austreten. Dieser Effekt wird nun durch die bei dem Ausführungsbeispiel gemäß den Figuren 4 bis 6 verwirklichten Überströmkanäle 30 in dem Kolben 17 vermieden, da die in dem Dichtspalt zwischen Kolben 17 und Behälter 10 nach oben drängende Flüssigkeit wieder nach innen in den Arbeitsraum 25 des Behälters 10 zurückgeführt wird.

Bei dem dargestellten Ausführungsbeispiel besteht der Kolben 17 aus einem Kolbenunterteil 32 und einem darauf mittels Stegen 34 abgestützten Kolbenoberteil 33, wobei die Stege 34 als radial verlaufende Trennwände ausgebildet sind, so daß sich im Bereich des Zwischenraumes 35 zwischen Kolbenunterteil 32 und Kolbenoberteil 33 zwischen ihnen liegende Überströmkammern ergeben. Das nach außen weisende Ende der Stege 34 ist gegenüber der Innenwandung des Behälters 10 um einen geringen Betrag nach innen versetzt, damit auch in dem dadurch festgelegten Wandungsbereich des Kolbens 17 keine Kapillarwirkung mit einer Überleitung der Flüssigkeitsanteile nach oben auftreten kann. Die Bodenfläche 31 der Überströmkanäle 30 ist nach innen hin geneigt, so daß die in die Überströmkanäle 30 eintretende Flüssigkeit besser abfließt.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Zerkleinerungsvorrichtung mit einem Behälter zur Aufnahme des zu zerkleinernden Gutes und einem darin umlaufend angeordneten Messer sowie mit einem den Arbeitsraum des Behälters verschließenden, als Deckel ausgebildeten Kolben, wobei der Arbeitsraum über den zum Boden des Behälters hin bewegbaren Kolben verkleinerbar ist, **dadurch gekennzeichnet, daß** der Kolben (17) ein sein kontinuierliches Einsinken in den Arbeitsraum (25) des Behälters (10) in Richtung auf das an dessen Boden angeordnete Messer (15) bewirkendes Eigengewicht aufweist, und daß der eine der Höhe des Behälters (10) zwischen der Messerebene und dem oberen Rand des Behälters (10) entsprechende axiale Erstreckung aufweisende Kolben (17) mittels an seiner äußeren Mantelfläche angeordneter Arretierungsgestaltungen (18, 19; 21) in einer vorbestimmten Endposition festlegbar ist.

2. Zerkleinerungsvorrichtung nach Anspruch 1, **dadurch gekennzeichnet, daß** der Kolben (17) auf seiner äußeren Mantelfläche mehrere mit axialem Abstand zueinander angeordnete umlaufende Rastnuten (18) zur Aufnahme eines über den oberen Rand des Behälters (10) überstehenden O-Ringes (19) aufweist.

3. Zerkleinerungsvorrichtung nach Anspruch 1, **dadurch gekennzeichnet, daß** der Kolben (17) auf seiner äußeren Mantelfläche einen Stahlring (21) aufweist und an der Außenseite des Behälters (10) ein beliebig positionierbarer Einstellring (22) mit an seiner dem Behälter (10) umschließenden Innenseite angeordneten Permanentmagneten (23) angesetzt ist.

4. Zerkleinerungsvorrichtung nach einem der Ansprüche 1 bis 3, **dadurch gekennzeichnet, daß** der Kolben (17) an seinem oberen Rand einen den Innendurchmesser des Behälters (10) überragenden Wulst (20) aufweist.

5. Zerkleinerungsvorrichtung nach einem der Ansprüche 1 bis 4, **dadurch gekennzeichnet, daß** zwischen der äußeren Mantelfläche des Kolbens (17) und der Innenwandung des Behälters (10) eine Gleitdichtung angeordnet ist.

6. Zerkleinerungsvorrichtung nach einem der Ansprüche 1 bis 5, **dadurch gekennzeichnet, daß** der Behälter (10) auf ein den Messerantrieb enthaltendes Gehäuse aufsetzbar und mittels einer Nut/Feder-Anordnung an dem Gehäuse verdrehgesichert festlegbar ist.

7. Zerkleinerungsvorrichtung nach einem der Ansprüche 1 bis 6, **dadurch gekennzeichnet, daß** der Behälter (10) an seinem Boden eine zentrisch angeordnete, in den Arbeitsraum (25) des Behälters (10) hineinragende Hülse (13) zur umschließenden Aufnahme der Antriebswelle des Messerantriebes aufweist und ein auf seiner Außenseite das Messer (15) tragender Messerzylinder (14) die Hülse (13) übergreifend auf die Hülse (13) aufsetzbar und innenseitig mit der durch die Hülse (13) ragenden Antriebswelle verriegelbar ist.

8. Zerkleinerungsvorrichtung nach einem der Ansprüche 1 bis 7, **dadurch gekennzeichnet, daß** das Messer (15) als ein den Messerzylinder (14) spiralförmig mit axialem Versatz umschließendes Spiralmesser ausgebildet ist.

9. Zerkleinerungsvorrichtung nach einem der Ansprüche 1 bis 8, **dadurch gekennzeichnet, daß** der Kolben (17) radial von seiner äußeren Mantelfläche nach innen bis in den Arbeitsraum (25) des Behälters (10) führende Überströmkanäle (30) aufweist.

10. Zerkleinerungsvorrichtung nach Anspruch 9, **dadurch gekennzeichnet, daß** die Überströmkanäle (30) eine nach innen geneigte Bodenfläche (31) aufweisen.

11. Zerkleinerungsvorrichtung nach Anspruch 9 oder 10, **dadurch gekennzeichnet, daß** der Kolben (17) aus einem Kolbenunterteil (32) und einem darauf mittels Stegen (34) abgestützten Kolbenoberteil (33) besteht, wobei der zwischen Kolbenunterteil (32) und Kolbenoberteil (33) bestehende Zwischenraum (35) die Überströmkanäle (30) ausbildet.

12. Zerkleinerungsvorrichtung nach Anspruch 11, **dadurch gekennzeichnet, daß** die Stege (34) gegenüber der äußeren Mantelfläche des Kolbens (17; 32, 33) unter Ausbildung eines Abstandes zur Innenwandung des Behälters (10) radial nach innen versetzt sind.

13. Zerkleinerungsvorrichtung nach Anspruch 11 oder 12, **dadurch gekennzeichnet, daß** die Stege (34) als radial verlaufende Trennwände zwischen durch sie gebildeten Überströmkammern ausgebildet sind.

## Claims

1. Comminuting device having a container for receiving the material to be comminuted and a knife which is disposed in a revolving manner therein, and also having a piston which occludes the working space of the container and is constructed as a lid, it being possible to make the working space smaller via the piston which can be moved towards the bottom of the container, **characterised in that** the piston (17) has an inherent weight which brings about continuous sinking of the said piston into the working space (25) of the container (10) in the direction of the knife (15) which is disposed at the bottom of the said container, and that the piston (17), which has an axial extension corresponding to the height of the container (10) between the knife plane and the upper rim of the said container (10), can be fixed in a predetermined end position by means of arresting formations (18, 19; 21) disposed on its outer superficies.

2. Comminuting device according to claim 1, **characterised in that** the piston (17) has, on its outer superficies, a number of circumferential latching grooves (18) which are disposed at an axial interval from one another, for receiving an O-ring (19) which projects beyond the upper rim of the container (10).

3. Comminuting device according to claim 1, **characterised in that** the piston (17) has a steel ring (21) on its outer superficies, and a setting ring (22), which can be positioned in any desired manner and which has a permanent magnet (23) disposed on its inner side that encloses the container (10), is attached to the outer side of the said container (10).

4. Comminuting device according to one of claims 1 to 3, **characterised in that** the piston (17) has, on its upper rim, a bead (20) that protrudes beyond the internal diameter of the container (10).

5. Comminuting device according to one of claims 1 to 4, **characterised in that** a sliding seal is disposed between the outer superficies of the piston (17) and the inner wall of the container (10).

6. Comminuting device according to one of claims 1 to 5, **characterised in that** the container (10) can be superimposed on a housing containing the knife drive and fixed on the said housing by means of a groove-and-tongue arrangement in a manner protected against twisting.

7. Comminuting device according to one of claims 1 to 6, **characterised in that** the container (10) has, at its bottom, a centrally disposed sleeve (13), which protrudes into the working space (25) of the said container (10), for receiving the drive shaft of the knife drive in an enclosing manner, and a knife cylinder (14), which carries the knife (15) on its outer side, can be superimposed on the sleeve (13) in such as way as to engage over the latter, and can be interlocked, on the inner side, with the drive shaft protruding through the said sleeve (13).

8. Comminuting device according to one of claims 1 to 7, **characterised in that** the knife (15) is constructed as a spiral knife which encloses the knife cylinder (14) in a spiral manner with an axial offset.

9. Comminuting device according to one of claims 1 to 8, **characterised in that** the piston (17) has overflow ducts (30) which lead radially inwards from its outer superficies as far as the working space (25) of the container (10) .

10. Comminuting device according to claim 9, **characterised in that** the overflow ducts (30) have an inwardly inclined bottom face (31) .

11. Comminuting device according to claim 9 or 10, **characterised in that** the piston (17) consists of a lower piston part (32) and an upper piston part (33) which is supported on the latter by means of webs (34), the intervening space (35) that exists between the lower piston part (32) and the upper piston part (33) constructing the overflow ducts (30).

12. Comminuting device according to claim 11, **characterised in that** the webs (34) are offset radially inwards in relation to the outer superficies of the piston (17; 32, 33), with the construction of an interval in relation to the inner wall of the container (10) .

13. Comminuting device according to claims 11 or 12, **characterised in that** the webs (34) are constructed as radially extending partitions between overflow chambers which they form.

## Revendications

1. Dispositif de broyage, avec un récipient pour le logement du matériau à broyer, et un couteau disposé en rotation à l'intérieur, ainsi qu'avec un piston fermant l'espace de travail du récipient et conçu comme un couvercle, l'espace de travail pouvant être réduit par le piston déplaçable en direction du récipient, **caractérisé en ce que** le piston (17) présente un poids propre entraînant son enfoncement continu dans l'espace de travail (25) du récipient (10) en direction du couteau ( 15) disposé sur son fond, et **en ce que** le piston ( 17) présentant un étirement axial correspondant à la hauteur du récipient ( 10) entre le plan du couteau et le bord supérieur du récipient ( 10) peut être défini dans une position finale prédéfinie au moyen de structures d'arrêt (18, 19 ; 21) disposées sur son enveloppe extérieure.

2. Dispositif de broyage selon la revendication 1, **caractérisé en ce que** le piston (17) présente, sur son enveloppe extérieure, plusieurs rainures d'arrêt ( 18) périphériques espacées d'une distance axiale les unes des autres pour le logement d'un joint torique (19) dépassant du bord supérieur du récipient (10).

3. Dispositif de broyage selon la revendication 1, **caractérisé en ce que** le piston (17) présente une bague d'acier (21) sur son enveloppe extérieure et une bague de réglage (22) positionnable de façon quelconque est placée sur le côté extérieur du récipient (10) avec des aimants permanents (23) disposés sur son côté intérieur entourant le récipient (10).

4. Dispositif de broyage selon l'une quelconque des revendications 1 à 3, **caractérisé en ce que** le piston (17) présente sur son bord supérieur un renflement ( 20) débordant du diamètre intérieur du récipient ( 10).

5. Dispositif de broyage selon l'une quelconque des revendications 1 à 4, **caractérisé en ce qu'**un joint de glissement est disposé entre l'enveloppe extérieure du piston (17) et la paroi interne du récipient (10).

6. Dispositif de broyage selon l'une quelconque des revendications 1 à 5, **caractérisé en ce que** le récipient (10) peut être posé sur un boîtier contenant la commande de couteau et peut être fixé sur le boîtier au moyen d'un dispositif rainure/languette de façon à être à l'abri des torsions.

7. Dispositif de broyage selon l'une quelconque des revendications 1 à 6, **caractérisé en ce que** le récipient (10) présente sur son fond une douille (13) disposée de façon centrée et dépassant à l'intérieur de l'espace de travail (25) du récipient (10) pour le logement d'enfermement de l'arbre d'entraînement de la commande de couteau, et un cylindre de couteau (14) portant le couteau (15) sur son côté extérieur peut être posé sur la douille (13) en la recouvrant et peut être verrouillé à l'intérieur avec l'arbre d'entraînement dépassant à travers la douille (13).

8. Dispositif de broyage selon l'une quelconque des revendications 1 à 7, **caractérisé en ce que** le couteau (15) est conçu comme un couteau à spirale qui entoure le cylindre de couteau (14) à la façon d'une spirale avec un déport axial.

9. Dispositif de broyage selon l'une quelconque des revendications 1 à 8, **caractérisé en ce que** le piston (17) présente des canaux de décharge (30) qui conduisent radialement de son enveloppe extérieure vers l'intérieur jusque dans l'espace de travail (25) du récipient (10).

10. Dispositif de broyage selon la revendication 9, **caractérisé en ce que** les canaux de décharge (30) présentent une surface de fond (31) inclinée vers l'intérieur.

11. Dispositif de broyage selon la revendication 9 ou 10, **caractérisé en ce que** le piston ( 17) comprend une partie inférieure de piston ( 32) et une partie supérieure de piston ( 33) soutenue dessus au moyen de nervures (34), l'espace intermédiaire ( 35) existant entre la partie inférieure de piston ( 32) et la partie supérieure de piston ( 33) formant les canaux de décharge ( 30).

12. Dispositif de broyage selon la revendication 11, **caractérisé en ce que** les nervures ( 34) sont décalées radialement vers l'intérieur par rapport à l'enveloppe extérieure du piston (17 ; 32, 33) en formant un espacement par rapport à la paroi interne du récipient (10).

13. Dispositif de broyage selon la revendication 11 ou 12, **caractérisé en ce que** les nervures (34) sont conçues comme des cloisons de séparation agencées dans un plan radial entre des chambres de décharge formées par elles.
